# EUROPEAN PATENT SPECIFICATION

(11) **EP 3 603 255 B1**
(45) Date of publication and mention of the grant of the patent: **15.06.2022**
(21) Application number: 18702702.4
(22) Date of filing: 05.02.2018
(51) Int. Cl.: H04W 72/04, H04W 36/00

(54) **METHOD TO ENHANCE VEHICLE-TO-VEHICLE COMMUNICATION USING A FREQUENCY BAND USED BY THE INTELLIGENT TRANSPORT SYSTEM AND AT LEAST ONE MOBILE COMMUNICATION NETWORK, MOBILE COMMUNICATION NETWORK, SYSTEM, USER EQUIPMENT, PROGRAM, AND COMPUTER PROGRAM PRODUCT**
VERFAHREN ZUR VERBESSERUNG DER FAHRZEUG-ZU-FAHRZEUG-KOMMUNIKATION MITHILFE EINES VOM INTELLIGENTEN TRANSPORTSYSTEM UND MINDESTENS EINEM MOBILKOMMUNIKATIONSNETZWERK VERWENDETEN FREQUENZBANDES, MOBILKOMMUNIKATIONSNETZWERK, SYSTEM, BENUTZERGERÄT, PROGRAMM UND COMPUTERPROGRAMMPRODUKT
PROCÉDÉ POUR AMÉLIORER LA COMMUNICATION VÉHICULE-VÉHICULE AU MOYEN D'UNE BANDE DE FRÉQUENCE UTILISÉE PAR LE SYSTÈME DE TRANSPORT INTELLIGENT ET AU MOINS UN RÉSEAU DE COMMUNICATION MOBILE, RÉSEAU DE COMMUNICATION MOBILE, SYSTÈME, ÉQUIPEMENT UTILISATEUR, PROGRAMME ET PRODUIT DE PROGRAMME INFORMATIQUE

(30) Priority: 22.03.2017 EP 17162243
(43) Date of publication of application: 05.02.2020
(73) Proprietor: Deutsche Telekom AG, 53113 Bonn (DE)
(72) Inventor: KLATT, Axel, 50999 Köln (DE)
(74) Representative: Schwöbel, Thilo K.
(86) International application number: PCT/EP2018/052735
(87) International publication number: WO 2018/171968

(56) References cited:
- WO-A1-2015/096845
- US-A1- 2014 226 629
- US-A1- 2014 235 234
- US-A1- 2016 073 298

## Description

### BACKGROUND

The present invention is defined by the appended claims.

In recent years, there has been a rapid development of establishing vehicle-to-vehicle (V2V) communication as well as communication between vehicles and infrastructure entities like traffic signs (V2I, vehicle-to-infrastructure), in particular without the direct involvement of entities of the access and core network of a mobile communications network in the exchange of messages. Such communication is, e.g., envisioned to improve the safety in road traffic and to help minimize traffic jams.

Modern mobile communication networks (e.g. long-term evolution (LTE)) are being developed or adapted to support direct communication between vehicles (e.g. cars, trucks, etc.) using the so-called PC5 interface ("sidelink") directly between the vehicles.

It is advantageous that the resource allocation on such radio transmission resources that are using the PC5 link (or which are used for realizing PC5 link communication) is controlled by the wireless mobile communication network or components thereof in order to minimise the risk of transmission collisions between different vehicles sending V2V messages. Therefore, the available spectrum is defined in a time - frequency fashion and transmission opportunities for individual vehicles (especially for each individual vehicle) are clearly defined.

Within a certain geographical area, the transmission opportunities can be controlled by a base station entity to enable efficient resource (spectrum) usage and avoid collision between signalling from different vehicles. In this context, document WO 2015/096845 A1 describes a method for managing device-to-device communication between mobile terminals in a communications network comprising a serving cell and a target cell. Document US 2016/073298 A1 describes the detection of an entry of a vehicle-to-vehicle communication device into a cell of the cellular network and an allocation of resources to this device and document US 2014/226629 A1 describes a handover procedure for a terminal communication over a device-to-device with another terminal.

A special use case for V2V communication (without direct network involvement) is "platooning". Platooning is the expression for a number of vehicles driving in a row (i.e. a convoy, especially sequentially one behind the next vehicle), being guided or controlled by a leading vehicle, i.e. a platoon manager vehicle. In such a scenario, it can be possible to allow automated driving for those vehicles following the leading vehicle. "Platooning" can especially be useful for trucks, wherein there is an additional significant benefit of better aerodynamics in case the distance of the trucks within a convoy can be significantly minimised. However, at present the resource allocation mechanisms are not sufficiently accurate and quick in order to allow vehicles in such a convoy to significantly reduce their relative distances, without increased risks.

### SUMMARY

An object of the present invention is the improvement of vehicle-to-vehicle communication using a frequency band being used by the intelligent transport system (ITS) and at least one mobile communication network to improve the possibilities and the performance of the intelligent transport system, especially in view of automated driving, while ensuring a high safety and/or enhancing the safety level and/or the capacity of the intelligent transport system.

The object of the present invention is achieved by a method according to claim 1.

Thereby, it is advantageously possible to improve the reliability of vehicle-to-vehicle communication, in particular for the case that a first vehicle or a first group of vehicles leaves the coverage area of a first base station entity (or is about to leave the coverage area of a first base station entity) and enters the coverage area of a second base station entity (or is about to enter the coverage area of a second base station entity). This is possible, because specific transmission resources (of the transmission resources) are allocated to a first vehicle or to a first group of vehicles within the first radio coverage area and transmission resources to be used for the first vehicle of the first group of vehicles are requested from a second base station entity (within an allocation request message) especially before the first vehicle or first group of vehicles leaves the coverage area of the first base station entity. Therefore, it is possible that the second base station entity reserves the requested transmission resources to be used for (or by) the first vehicle or the first group of vehicles either more quickly and/or at an earliert point in time, especially before the first vehicle or the first group of vehicles leaves the coverage area of the first base station entity. Within a second step, it is possible that further specific transmission resources are assigned (or allocated) to the first vehicle or the first group of vehicles for the signaling in the coverage area of the second base station entity. An information regarding the allocation of said further specific transmission resources is transmitted to the first vehicle or the first group of vehicles as part of an allocation acknowledgement message (in particular still before the first vehicle or the first group of vehicles leaves the coverage area of the first base station entity). Therefore, the first vehicle or the first group of vehicles is aware which further specific transmission resources (that are to be used by and allocated to the first vehicle or the first group of vehicles for V2V communication within the coverage area of the second base station entity) are assigned to the first vehicle or the first group of vehicles for V2V communication within the second coverage area of the second base station entity, especially before the first vehicle leaves or the first group of vehicles leave the coverage area of the first base station entity and/or before the first vehicle enters or the first group of vehicles enter the coverage area of the second base station entity. Therefore, the handover of the first vehicle or the first group of vehicles between the coverage area of the first base station entity and the second base station entity is improved and delay times, arising, e.g., because vehicles traveling from a first coverage area of a first base station entity to a second coverage area of a second base station entity have to be informed about a change of the transmission resources allocated to the fist vehicle when changing the coverage area, are minimized. A particular advantage arises for the case that some vehicles of a first group of vehicles have already entered a second coverage area (and especially left the first coverage area of the first base station entity) and other vehicles of the first group of vehicles are still in the first coverage area (and are especially still served by the first base station entity), which might lead to communication problems, when using V2V communication schemes known from the state of the art (between the vehicles of the first group of vehicles).

According to an embodiment of the method according to the present invention, the allocation request message comprises an allocation request information such that the specific transmission resources used within the first radio coverage area are also to be used, as further specific transmission resources within the second radio coverage area.

Thereby, it is advantageously possible that the requested transmission resources to be used within the second radio coverage area are identical to the specific transmission resources (or the same transmission resources as the specific transmission resources) used within the first coverage area. Since it is possible that the second base station entity is informed about this request within the first step as part of the allocation request message and especially before the first vehicle or the first group of vehicles leaves the first coverage area, the second base station can reserve further specific transmission resources for the first vehicle or for the first group of vehicles that are identical to the specific transmission resources. Accordingly, it is possible that - for a handover between the first and second coverage area - the vehicle-to-vehicle communication within a first group of is not interrupted during the transition of a first group of vehicles from a first coverage area to a second coverage area and the handover procedure is improved.

According to an embodiment of the method according to the present invention, the allocation acknowledgement message comprises an allocation acknowledgement information such that the further specific transmission resources, to be used within the second radio coverage area, correspond to or are identical in time and frequency to the specific transmission resources.

Thereby, it is advantageously possible that the requested transmission resources to be used within the second radio coverage area are (or correspond to) the specific transmission resources (or the same transmission resources as the specific transmission resources) used within the first coverage area. Since it is possible that the second base station entity is informed about this request within the first step as part of the allocation request message and especially before the first vehicle or the first group of vehicles leaves the first coverage area, the second base station can reserve further specific transmission resources for the first vehicle or for the first group of vehicles that are identical to the specific transmission resources. Accordingly, it is possible that the first vehicle or the first group of vehicles is informed that the further specific transmission resources and the specific transmission resources are identical (by the allocation acknowledgment information as part of the allocation acknowledgement message). Thus, when (or before) the first vehicle or the first group of vehicles leaves the first coverage area (and/or enters the second coverage area and/or transitions from the first coverage area to the second coverage area), first vehicle or the first group of vehicles can continue to communicate using the same or identical specific transmission resources (i.e. the same frequency slots and/or relative time slots) as the further specific transmission resources. This is particularly useful, when some vehicles of a first group of vehicles have already entered the second coverage area (and especially left the first coverage area) and other vehicles of the first group of vehicles are still within the first coverage area (and not yet served by the second base station entity), because the even for such a situation all vehicles of the first group of vehicles can still communicate via V2V communication using the identical transmission resources (i.e. the specific transmission resources).

According to an embodiment of the method according to the present invention, the specific transmission resources are used within the first and the second radio coverage areas, and wherein the requested specific transmission resources especially correspond to using
-- the same frequency domain resources and the same time domain resources, and/or
-- the same frequency domain resources and the same time domain resources regarding a specific repetition time interval.

According to the present invention, the allocation request information comprises an indication
-- of a periodicity of the platoon-internal communication, and/or
-- of an expected data volume of platoon-internal communication.

Preferably, the allocation request information comprises furthermore an indication
-- of a priority of the plurality of vehicles, and/or
-- of the requested further specific transmission resources corresponding to or being identical to the specific transmission resources.

It is thereby possible, that the second base station entity is informed as part of the allocation request message about the requirements (or needs) of the internal V2V communication of the first group of vehicles (in particular before the first group of vehicles enters the second coverage area). Thereby, it is possible that the second base station entity allocates appropriate further specific transmission resources to the first group of vehicles (or the first vehicle) taking into account information
-- on the periodicity and/or of the specific repetition time interval, especially of a periodicity of the platoon-internal communication, and/or
-- on an expected data volume of platoon-internal communication, and/or
-- on a priority of the plurality of vehicles, and/or
-- on the requested further specific transmission resources corresponding to or being identical to the specific transmission resources.

According to an embodiment of the method according to the present invention, the specific transmission resources and the further specific transmission resources are used by a plurality of vehicles, the plurality of vehicles forming a platoon, especially a truck platoon or a light truck platoon or a car platoon or a combined platoon, comprising both trucks and/or light trucks and/or cars, and wherein the platoon comprises a platoon manager vehicle and at least one platoon member vehicle.

Thereby, it is advantageously possible that the plurality of vehicles (or the first group of vehicles) forms a platoon in which one of the vehicles within the platoon acts as a platoon manager vehicle. It is thereby possible that the platoon manager vehicle, e.g., the first vehicle of the platoon (convoy), communicates via V2V communication to the other vehicles of the plurality of vehicles (first group of vehicles).

According to an embodiment of the method according to the present invention, the allocation request message is transmitted, to the second base station entity and within the second radio coverage area, by the first vehicle - especially being a manager vehicle of the platoon of the plurality of vehicles - or by a first group of vehicles, and wherein the allocation acknowledgement message is transmitted, to the first vehicle - especially being a manager vehicle of the platoon of the plurality of vehicles - or to the first group of vehicles and within the second radio coverage area, by the second base station entity.

According to a preferred embodiment of the method according to the present invention, the allocation request message is transmitted, to the second base station entity, by the first base station entity, wherein the allocation acknowledgement message is transmitted, to the first vehicle - especially being a manager vehicle of the platoon of the plurality of vehicles - or to the first group of vehicles and within the first radio coverage area, by the first base station entity, wherein, prior to transmitting the allocation acknowledgement message to the first vehicle or to the first group of vehicles, a further allocation acknowledgement message is transmitted, by the second base station entity to the first base station entity, wherein, especially prior to transmitting the allocation request message by the first base station entity to the second base station entity, a further allocation request message is transmitted, by the first vehicle or by a first group of vehicles, to the first base station entity and within the first radio coverage area.

Further, the present invention also relates to a mobile communication network according to claim 10.

Furthermore, the present invention relates to a system to enhance vehicle-to-vehicle communication using a frequency band being used by the intelligent transport system and at least one mobile communication network, wherein the system comprises a mobile communication network according to claim 10 and a plurality of vehicles, wherein each vehicle of the plurality of vehicles comprises or is associated with a corresponding user equipment being enabled to transmit, within the frequency band, proximity services direct communication messages.

Furthermore, the present invention relates to user equipment within a vehicle to enhance vehicle-to-vehicle communication using a frequency band used by the intelligent transport system and at least one mobile communication network according to claim 10 or using a method according to claim 1.

Furthermore, the present invention relates to a program according to claim 11.

Furthermore, the present invention relates to a computer program product according to claim 12.

According to a preferred embodiment of the present invention, the first base station entity and/or the second base station entity is an eNodeB, a femto-cell or a road side unit (e.g., integrated in a street sign).

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a system comprising a mobile communications network according to an embodiment of the present invention.
Figure 2 schematically illustrates transmission resources according to an embodiment of the present invention.
Figure 3 schematically illustrate a method according to a first embodiment of the present invention.
Figure 4 schematically illustrate a method according to a second embodiment of the present invention.
Figure 5 schematically illustrate a method according to a third embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

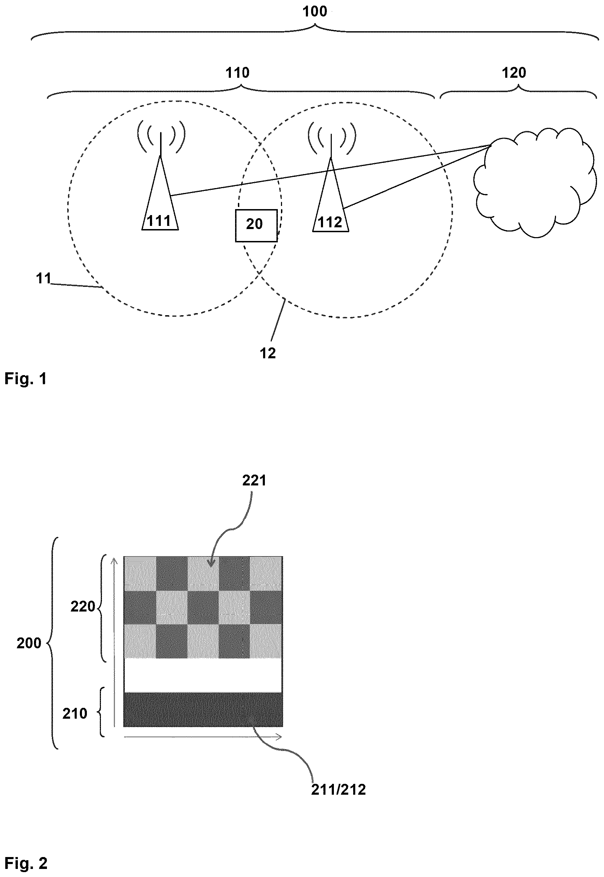

In Figure 1, a system comprising a system to enhance vehicle-to-vehicle communication using a frequency band used by the intelligent transport system and at least one mobile communication network 100 is depicted. The system comprises a mobile communication network 100 and at least a first vehicle 20 (or a plurality of vehicles 20, 21, 22). The mobile communication network 100 comprises a radio access network 110 and a core network 120. A first base station entity 111 and a second base station entity 112 (and usual many further base station entities) are part of the radio access network 110. The first base station entity 111 and the second base station entity 112 can, e.g., be eNodeBs but also other base station entities. The first base station entity 111 covers (serves) a first radio coverage area 11 and the second base station entity 112 covers (serves) a second coverage area 12. Often, the first and second coverage areas 11, 12 of a first base station entity 111 and a neighboring second base station entity 112 overlap partially to ensure that there are no regions without network coverage in between the coverage areas. In particular, a first vehicle 20 is located in a region, where the first coverage area 11 and the second coverage area 12 overlap (but it is also possible that the first vehicle 20 is located at any other point within the first or second coverage area 11, 12). The first vehicle 20 comprises or carries a user equipment that is configured to be able to transmit, within a frequency band, communication messages (especially vehicle-to-vehicle communication) and is especially also capable of communicating with base station entities (e.g. at least the first base station entity 111 and/or the second base station entity 112) of the radio access network 110. It is possible that the first vehicle 20 moves from the first coverage area 11 to the second coverage 12 (,wherein in the situation depicted in Figure 1, the first vehicle 20 is currently located in the overlapping region of the first and second coverage area 11, 12) and a handover procedure has to be carried out.

In Figure 2, transmission resources 200 according to an embodiment of the present invention are schematically illustrated. The transmission resources 200 comprise a frequency domain (vertical blue arrow in Figure 2) and a time domain (horizontal blue arrow in Figure 2). In Figure 2, the total transmission resources (used or allocated for intelligent traffic system PC5 communication) are shown to comprise a first part, also called regular transmission resources 220, 221, for vehicle-to-vehicle communication, contention based, and a second part, also called allocated transmission resources 210, for vehicle-to-vehicle communication such that transmission resources are used by the vehicles that are (previously) allocated by the corresponding base station entity. The specific transmission resources 211, allocated to the first vehicle 20 or the first group of vehicles 20, 21, 22 (at least within the first coverage area 11), are part of the allocated transmission resources 210 of the transmission resources 200. The further specific transmission resources 212, allocated to the first vehicle 20 or to the first group of vehicles 20, 21, 22 (at least within the second coverage area 12), are likewise part of the allocated transmission resources 210 of the transmission resources 200. In the embodiment depicted in Figure 2, the specific transmission resources 211 and further specific transmission resources 212 are identical (in particular, the specific transmission resources 211 and further specific transmission resources 212 have the same frequency domain resources and the same time domain resources).

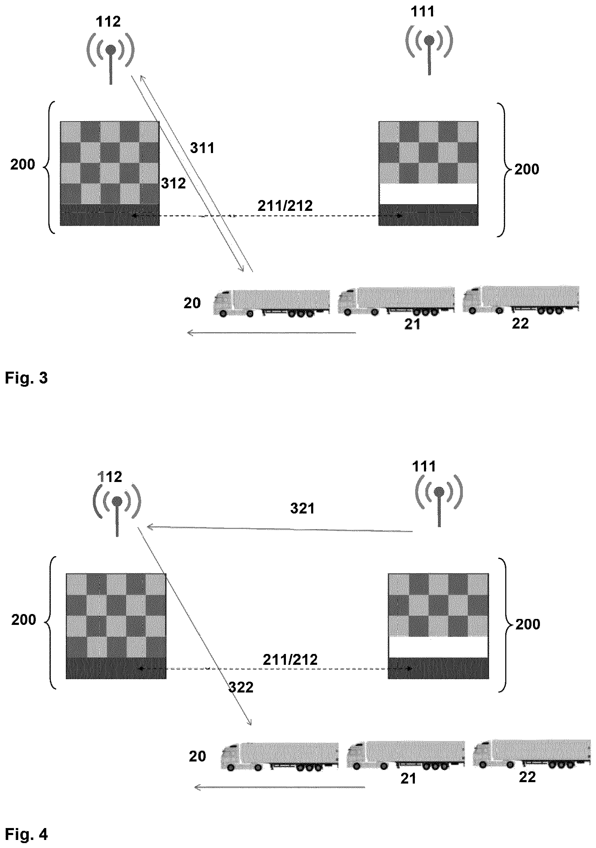

In Figure 3, a method according to a first embodiment of the present invention is schematically illustrated. A first group of vehicles 20, 21, 22 (e.g., a platoon of trucks) is shown. The first group of vehicles 20, 21, 22 comprises a platoon manager vehicle 20, which leads the convoy of vehicles 20, 21, 22 (i.e. the first group of vehicles 20, 21, 22). In this embodiment, the first group of vehicles 20, 21, 22 is preferably located in an overlap region of a first coverage area 11 of a first base station entity 111 and a second coverage area 12 of a second base station entity 112 (or at least the platoon manager vehicle 20 is located in such an overlap region) and travels in the direction of the second coverage area 12 of the second base station entity 112. Within a first and second coverage area 11, 12, transmission resources 200 are generally available for vehicle-to-vehicle communication. As part of a first step, specific transmission resources 211 of the transmission resources 200 have been allocated, by the radio access network 110 and/or by the first base station entity 111, to the first vehicle 20 (i.e. the platoon manager vehicle 20) or to the first group of vehicles 20, 21, 22 for use within the first radio coverage area 11. This preferably already happens while the first group of vehicles 20, 21 ,22 enters or is located within the first coverage area 11 (or even before the first group of vehicles 20, 21, 22 enters the first coverage area 11) and before the exchange of messages depicted in Figure 3 begins. Preferably after the allocation of the specific transmission resources 211 has taken place and while the first group of vehicles 20, 21, 22 (or at least the platoon manager vehicle 20) is located in an overlap region of the first coverage area 11 and the second coverage area 12, an allocation request message 311 is transmitted to the second base station entity 112 by the platoon manager vehicle 20. The allocation request message 311 comprises an allocation request information regarding transmission resources 200 to be used within the second radio coverage area 12 served by the second base station entity 112. In particular the allocation request information indicates that the specific transmission resources 211 used by the platoon manager vehicle 20 (or by the first group of vehicles 20, 21, 22) within the first radio coverage area 11 are also to be used as further specific transmission resources 212 within the second radio coverage area 12. Thus, the second base station entity 112 is informed about the preferred further specific transmission resources 212 that the platoon manager vehicle 20 wants to use within the second coverage area 12, preferably right when (or after) the platoon manager vehicle 20 enters the second coverage area 12 and preferably still located within the first coverage area 11. It is accordingly possible that the mobile communication network and in particular the second base station entity 112 reserve the requested transmission resources for the first vehicle 20 and/or the first group of vehicles 20, 21, 22. In a following second step, the first vehicle 20 or the first group of vehicles 20, 21, 22 receives an allocation acknowledgement message 312 which is transmitted by the second base station entity 112. The allocation acknowledgement message 312 comprises an allocation acknowledgement information regarding an allocation of further specific transmission resources 212 to be used within the second radio coverage area 12. Since the platoon manager vehicle has requested to use the specific transmission resources 211 as well in the second coverage area 12, it is possible that the further specific transmission resources 212 allocated to the first vehicle 20 or the first group of vehicles 20, 21, 22 are identical to the specific transmission resources 211 which enables a unproblematic handover without time windows, during which the first group of vehicles might have problems using (internal) vehicle-to-vehicle communication. Such problems might otherwise, e.g., arise because the first vehicle 20 and the last vehicle 22 of the first group of vehicles 20, 21, 22 could be served by different base stations 111, 112 at one point time (while transitioning from the first to the second coverage area 11, 12). In such a scenario, the first vehicle 20 and the last vehicle 22 might be unaware that non-identical specific and further specific transmission resources 211, 212 are allocated to them during this time window. This poses great safety risks and prevents establishing a convoy, wherein the vehicles 21, 22 are automatically following the platoon manager vehicle 20 with extremely reduced distances, respectively.

In Figure 4, a method according to a second embodiment of the present invention is schematically illustrated. A first group of vehicles 20, 21, 22 (e.g., a platoon of trucks) is shown. The first group of vehicles 20, 21, 22 comprises a platoon manager vehicle 20, which leads the convoy of vehicles 20, 21, 22 (i.e. the first group of vehicles 20, 21, 22). In this embodiment, the first group of vehicles 20, 21, 22 (or at least the platoon manager vehicle 20) is located within a first coverage area 11 of a first base station entity 111 or in an overlap region of a first coverage area 11 of a first base station entity 111 and a second coverage area 12 of a second base station entity 112 and travels in the direction of the second coverage area 12 of the second base station entity 112. Within the first and second coverage areas 11, 12, transmission resources 200 are generally available for vehicle-to-vehicle communication. As part of a first step, specific transmission resources 211 of the transmission resources 200 have been allocated, by the radio access network 110 or by the first base station entity 111, to the first vehicle 20 (i.e. the platoon manager vehicle 20) or to the first group of vehicles 20, 21, 22 within the first radio coverage area 11. This preferably already happens while the first group of vehicles 20, 21 ,22 enters or is located within the first coverage area 11 (or even before the first group of vehicles 20, 21, 22 enters the first coverage area 11) and before the exchange of messages depicted in Figure 4 begins. Preferably after the allocation of the specific transmission resources 211 has taken place and while the first group of vehicles 20, 21, 22 (or at least the platoon manager vehicle 20) is located in the first coverage area 11 or in an overlap region of the first coverage area 11 and the second coverage area 12, an allocation request message 321 is transmitted to the second base station entity 112 by the first base station entity 111. The allocation request message 321 comprises an allocation request information regarding transmission resources 200 to be used within the second radio coverage area 12 served by the second base station entity 112. In particular the allocation request information indicates that the specific transmission resources 211 used by the platoon manager vehicle 20 (or by the first group of vehicles 20, 21, 22) within the first radio coverage area 11 are also to be used as further specific transmission resources 212 within the second radio coverage area 12. Thus, the second base station entity 112 is informed about the preferred further specific transmission resources 212 that the platoon manager vehicle 20 wants to use within the second coverage area 12, preferably before the platoon manager vehicle 20 enters the second coverage area 12 or at least before the platoon manager vehicle 20 leaves the first coverage area 11. It is accordingly possible that the mobile communication network 100 and in particular the second base station entity 112 reserve the requested transmission resources for the first vehicle 20 and/or the first group of vehicles 20, 21, 22. In a following second step, the first vehicle 20 or the first group of vehicles 20, 21, 22 receives an allocation acknowledgement message 322 which is transmitted by the second base station entity 112 (in particular while the platoon manager vehicle 20 is located in the overlap region of the first and second coverage area 11, 12). The allocation acknowledgement message 322 comprises an allocation acknowledgement information regarding an allocation of further specific transmission resources 212 to be used within the second radio coverage area 12. Since the platoon manager vehicle 20 has requested to use the specific transmission resources 211 in the second coverage area 12 as well, it is possible that the further specific transmission resources 212 allocated to the first vehicle 20 or the first group of vehicles 20, 21, 22 are identical to the specific transmission resources 211, which enables a unproblematic handover without time windows, during which the first group of vehicles might have problems using (internal) vehicle-to-vehicle communication.

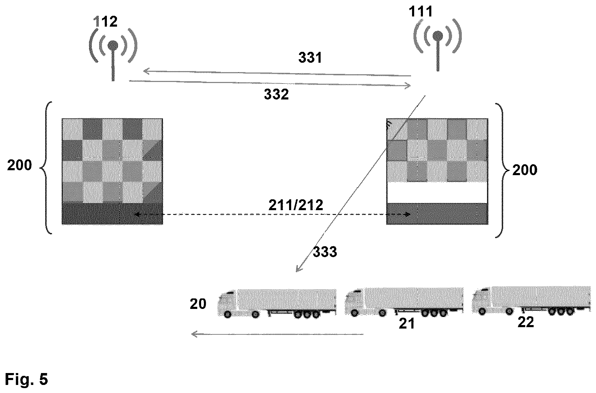

In Figure 5, a method according to a third embodiment of the present invention is schematically illustrated. A first group of vehicles 20, 21, 22 (e.g., a platoon of trucks) is shown. The first group of vehicles 20, 21, 22 comprises a platoon manager vehicle 20, which leads first group of vehicles 20, 21, 22. In this embodiment, the first group of vehicles 20, 21, 22 (or at least the platoon manager vehicle 20) is located within a first coverage area 11 of a first base station entity 111 or in an overlap region of a first coverage area 11 of a first base station entity 111 and a second coverage area 12 of a second base station entity 112 and travels in the direction of the second coverage area 12 of the second base station entity 112. Within the first and second coverage areas 11, 12, transmission resources 200 are generally available for vehicle-to-vehicle communication. As part of a first step, specific transmission resources 211 of the transmission resources 200 have been allocated, by the radio access network 110 or by the first base station entity 111, to the first vehicle 20 (i.e. the platoon manager vehicle 20) or to the first group of vehicles 20, 21, 22 within the first radio coverage area 11. This preferably already happens while the first group of vehicles 20, 21 ,22 enters or is located within the first coverage area 11 (or even before the first group of vehicles 20, 21, 22 enters the first coverage area 11) and before the exchange of messages depicted in Figure 5 begins. Preferably after the allocation of the specific transmission resources 211 has taken place and while the first group of vehicles 20, 21, 22 (or at least the platoon manager vehicle 20) is located in the first coverage area 11 or in an overlap region of the first coverage area 11 and the second coverage area 12, an allocation request message 331 is transmitted to the second base station entity 112 by the first base station entity 111. The allocation request message 331 comprises an allocation request information regarding transmission resources 200 to be used within the second radio coverage area 12 served by the second base station entity 112. In particular the allocation request information indicates that the specific transmission resources 211 used by the platoon manager vehicle 20 (or by the first group of vehicles 20, 21, 22) within the first radio coverage area 11 are also to be used as further specific transmission resources 212 within the second radio coverage area 12. Thus, the second base station entity 112 is informed about the preferred further specific transmission resources 212 for the platoon manager vehicle 20 to be used within the second coverage area 12, preferably before the platoon manager vehicle 20 enters the second coverage area 12 or at least before the platoon manager vehicle 20 leaves the first coverage area 11. It is accordingly possible that the mobile communication network and in particular the second base station entity 112 reserve the requested transmission resources for the first vehicle 20 and/or the first group of vehicles 20, 21, 22. In a following second step, the second base station entity 112 transmits an allocation acknowledgement message 332 to the first base station entity 11 (this is e.g. possible while the platoon manager vehicle 20 is still located in the first coverage area 11 or alternatively while the platoon manager vehicle 20 is located in the overlap region of the first and second coverage areas 11, 12). The allocation acknowledgement message 322 comprises an allocation acknowledgement information regarding an allocation of further specific transmission resources 212 to be used within the second radio coverage area 12 by the first vehicle 20 or the first group of vehicles 20, 21, 22. Since the first base station entity 111 has indicated (and requested) the specific transmission resources 211 to the second base station entity 212 within the allocation request message 331, it is possible that the further specific transmission resources 212 allocated to the first vehicle 20 or the first group of vehicles 20, 21, 22 for use in the second coverage are 12 are identical to the specific transmission resources 211. In the following, an allocation acknowledgement message 333 is transmitted from the first base station entity 111 to the platoon manager vehicle 20 or to the first group of vehicles 20, 21, 22, indicating the further specific transmission resources 212 to the platoon manager vehicle 20 or to the first group of vehicles 20, 21, 22. In this embodiment, it is advantageously possible to inform the platoon manager vehicle 20 or to the first group of vehicles 20, 21, 22 by means of the allocation acknowledgement message 333 about which further specific transmission resources 212 are allocated to the platoon manager vehicle 20 or to the first group of vehicles 20, 21, 22 before the platoon manager vehicle 20 or to the first group of vehicles 20, 21, 22 enters the second coverage area 12. It is also possible that prior to transmitting the allocation request message 331 by the first base station entity 111 to the second base station entity 112, a further allocation request message is transmitted, by the first vehicle 20 or by the first group of vehicles 20, 21, 22, to the first base station entity 111, wherein this further allocation request message especially triggers the transmission of the allocation request message 331 from the first base station entity 111 to the second base station entity 112.

## Claims

1. Method to enhance vehicle-to-vehicle communication using a frequency band being used by an intelligent transport system and at least one mobile communication network (100), wherein the at least one mobile communication network (100) comprises a radio access network (110) comprising a plurality of base station entities (111, 112), each one of the plurality of base station entities (111, 112) having or corresponding to a radio coverage area (11, 12), respectively,
wherein the intelligent transport system comprises a plurality of vehicles (20, 21, 22) forming a platoon, wherein each vehicle of the plurality of vehicles (20, 21, 22) comprises or is associated with a corresponding user equipment being enabled to transmit, within the frequency band, proximity services direct communication messages,
wherein the frequency band comprises transmission resources (200) for the transmission, by the user equipments of the plurality of vehicles (20, 21, 22), of such proximity services direct communication messages, wherein the allocation of transmission resources (200) to user equipments of vehicles (20, 21, 22) is, at least partly, controlled by the radio access network (110) of the mobile communication network (100),
wherein, regarding a first and a second partly overlapping and/or adjacent and/or neighboring radio coverage areas (11, 12), user equipments of the plurality of vehicles (20, 21, 22) are using transmission resources (200), according to their path of travel, within the first radio coverage area (11), and subsequently within the second radio coverage area (12),
wherein the method comprises the following steps:
-- in a first step, specific transmission resources (211) of the transmission resources (200) are allocated, by the radio access network (110) or by the first base station entity (111), to a first vehicle (20) or to a first group of vehicles (20, 21, 22) within the first radio coverage area (11), and an allocation request message (311, 321, 331) is transmitted to the second base station entity (112), wherein the allocation request message (311, 321, 331) comprises an allocation request information regarding transmission resources (200) to be used within the second radio coverage area (12),
-- in a second step, subsequent to the first step, the first vehicle (20) receives or the first group of vehicles (20, 21, 22) receive an allocation acknowledgement message (312, 322, 333), wherein the allocation acknowledgement message (312, 322, 333) comprises an allocation acknowledgement information regarding an allocation of further specific transmission resources (212) to be used within the second radio coverage area (12),
wherein the allocation request information comprises an indication
-- of a periodicity of platoon-internal communication, and/or
-- of an expected data volume of platoon-internal communication.

2. Method according to claim 1, wherein the allocation request message (311, 321, 331) comprises an allocation request information such that the specific transmission resources (211) used within the first radio coverage area (11) are also to be used, as further specific transmission resources (212) within the second radio coverage area (12).

3. Method according to one of the preceding claims, wherein the allocation acknowledgement message (312, 322, 333) comprises an allocation acknowledgement information such that the further specific transmission resources (212), to be used within the second radio coverage area (12), correspond to or are identical in time and frequency to the specific transmission resources (211).

4. Method according to one of the preceding claims, wherein the specific transmission resources (211) are used within the first and the second radio coverage areas (11, 12), and wherein the requested specific transmission resources (211) especially correspond to using
-- the same frequency domain resources and the same time domain resources, and/or
-- the same frequency domain resources and the same time domain resources regarding the specific repetition time interval.

5. Method according to one of the preceding claims, wherein the allocation request information comprises an indication
-- of a priority of the plurality of vehicles (20, 21, 22), and/or
-- of the requested further specific transmission resources (212) corresponding to or being identical to the specific transmission resources (211).

6. Method according to one of the preceding claims, wherein the specific transmission resources (211) and the further specific transmission resources (212) are used by the plurality of vehicles (20, 21, 22) forming the platoon, especially a truck platoon or a light truck platoon or a car platoon or a combined platoon, comprising both trucks and/or light trucks and/or cars, and wherein the platoon comprises a platoon manager vehicle (20) and at least one platoon member vehicle (21, 22).

7. Method according to one of the preceding claims, wherein the allocation request message (311) is transmitted, to the second base station entity (112) and within the second radio coverage area (12), by the first vehicle (20) - especially being a manager vehicle (20) of a platoon of a plurality of vehicles - or by a first group of vehicles (20, 21, 22), and wherein the allocation acknowledgement message (312) is transmitted, to the first vehicle (20) - especially being a manager vehicle (20) of a platoon of a plurality of vehicles - or to the first group of vehicles (20, 21, 22) and within the second radio coverage area (12), by the second base station entity (112).

8. Method according to one of the preceding claims, wherein the allocation request message (321) is transmitted, to the second base station entity (112), by the first base station entity (111), and wherein the allocation acknowledgement message (322) is transmitted, to the first vehicle (20) - especially being a manager vehicle (20) of a platoon of a plurality of vehicles - or to the first group of vehicles (20, 21, 22) and within the second radio coverage area (12), by the second base station entity (112).

9. Method according to one of the preceding claims, wherein the allocation request message (331) is transmitted, to the second base station entity (112), by the first base station entity (111), wherein the allocation acknowledgement message (333) is transmitted, to the first vehicle (20) - especially being a manager vehicle (20) of a platoon of a plurality of vehicles - or to the first group of vehicles (20, 21, 22) and within the first radio coverage area (11), by the first base station entity (111), wherein, prior to transmitting the allocation acknowledgement message (333) to the first vehicle (20) or to the first group of vehicles (20, 21, 22), a further allocation acknowledgement message (332) is transmitted, by the second base station entity (112) to the first base station entity (111), wherein, especially prior to transmitting the allocation request message (331) by the first base station entity (111) to the second base station entity (112), a further allocation request message is transmitted, by the first vehicle (20) or by a first group of vehicles (20, 21, 22), to the first base station entity (111) and within the first radio coverage area (11).

10. Mobile communication network (100) to enhance vehicle-to-vehicle communication using a frequency band being used by an intelligent transport system and at least one mobile communication network (100), wherein the at least one mobile communication network (100) comprises a radio access network (110) comprising a plurality of base station entities (111, 112), each one of the plurality of base station entities (111, 112) having or corresponding to a radio coverage area (11, 12), respectively,
wherein the intelligent transport system comprises a plurality of vehicles (20, 21, 22) forming a platoon, wherein each vehicle of the plurality of vehicles (20, 21, 22) comprises or is associated with a corresponding user equipment being enabled to transmit, within the frequency band, proximity services direct communication messages,
wherein the frequency band comprises transmission resources (200) for the transmission, by the user equipments of the plurality of vehicles (20, 21, 22), of such proximity services direct communication messages, wherein the allocation of transmission resources (200) to user equipments of vehicles (20, 21, 22) is, at least partly, controlled by the radio access network (110) of the mobile communication network (100),
wherein, regarding a first and a second partly overlapping and/or adjacent and/or neighboring radio coverage areas (11, 12), user equipments of the plurality of vehicles (20, 21, 22) are using transmission resources (200), according to their path of travel, within the first radio coverage area (11), and subsequently within the second radio coverage area (12),
wherein the mobile communication network (100) is configured such that:
-- specific transmission resources (211) of the transmission resources (200) are allocated, by the radio access network (110) or by the first base station entity (111), to a first vehicle (20) or to a first group of vehicles (20, 21, 22) within the first radio coverage area (11), and an allocation request message (311, 321, 331) is received by the second base station entity (112), wherein the allocation request message (311, 321, 331) comprises an allocation request information regarding transmission resources (200) to be used within the second radio coverage area (12),
-- the first and/or the second base station entity (111, 112) transmits, especially to the first vehicle (20) or to the first group of vehicles (20, 21, 22), an allocation acknowledgement message (312, 322, 333), wherein the allocation acknowledgement message (312, 322, 333) comprises an allocation acknowledgement information regarding an allocation of further specific transmission resources (212) to be used within the second radio coverage area (12),
wherein the allocation request information comprises an indication
-- of a periodicity of platoon-internal communication, and/or
-- of an expected data volume of platoon-internal communication.

11. Program comprising a computer readable program code which, when executed in a mobile communication network (100) according to claim 10, causes the mobile communication network (100) to perform a method according one of claims 1 to 9.

12. Computer program product to enhance vehicle-to-vehicle communication using a frequency band being used by the intelligent transport system and at least one mobile communication network (100), the computer program product comprising a computer program stored on a storage medium, the computer program comprising program code which, when executed in a mobile communication network (100) according to claim 10, causes the mobile communication network (100) to perform a method according one of claims 1 to 9.

## Patentansprüche

1. Verfahren zur Verbesserung einer Fahrzeug-zu-Fahrzeug-Kommunikation unter Verwendung eines Frequenzbandes, das durch ein intelligentes Transportsystem und mindestens ein Mobilkommunikationsnetz (100) verwendet wird,
wobei das mindestens eine Mobilkommunikationsnetz (100) ein Funkzugangsnetz (110) umfasst, das mehrere Basisstationsentitäten (111, 112) umfasst, wobei jede der mehreren Basisstationsentitäten (111, 112) ein Funkversorgungsgebiet (11, 12) aufweist bzw. einem Funkversorgungsgebiet (11, 12) entspricht,
wobei das intelligente Transportsystem mehrere Fahrzeuge (20, 21, 22) umfasst, die einen Zug bilden,
wobei jedes Fahrzeug der mehreren Fahrzeuge (20, 21, 22) eine entsprechende Benutzerausrüstung umfasst oder mit einer entsprechenden Benutzerausrüstung verknüpft ist, die dazu eingerichtet ist, innerhalb des Frequenzbandes direkte Kommunikationsnachrichten von Proximity Services zu senden,
wobei das Frequenzband Senderessourcen (200) für das Senden solcher direkter Kommunikationsnachrichten von Proximity Services durch die Benutzerausrüstungen der mehreren Fahrzeuge (20, 21, 22) umfasst,
wobei die Zuteilung von Senderessourcen (200) an Benutzerausrüstungen von Fahrzeugen (20, 21, 22) mindestens teilweise durch das Funkzugangsnetz (110) des Mobilkommunikationsnetzes (100) gesteuert wird,
wobei bezüglich eines ersten und eines zweiten teilweise überlappenden und/oder angrenzenden und/oder benachbarten Funkversorgungsgebietes (11, 12) Benutzerausrüstungen der mehreren Fahrzeuge (20, 21, 22) Senderessourcen (200) gemäß ihrem Fahrpfad innerhalb des ersten Funkversorgungsgebietes (11) und anschließend innerhalb des zweiten Funkversorgungsgebietes (12) nutzen,
wobei das Verfahren die folgenden Schritte umfasst:
- in einem ersten Schritt werden spezifische Senderessourcen (211) der Senderessourcen (200) durch das Funkzugangsnetz (110) oder durch die erste Basisstationsentität (111) einem ersten Fahrzeug (20) oder einer ersten Gruppe von Fahrzeugen (20, 21, 22) innerhalb des ersten Funkversorgungsgebietes (11) zugeordnet und eine Zuordnungsanforderungsnachricht (311, 321, 331) wird an die zweite Basisstationsentität (112) gesendet,
wobei die Zuordnungsanforderungsnachricht (311, 321, 331) eine Zuordnungsanforderungsinformation bezüglich Senderessourcen (200) umfasst, die innerhalb des zweiten Funkversorgungsgebietes (12) zu verwenden sind,
- in einem zweiten Schritt, im Anschluss an den ersten Schritt, empfängt das erste Fahrzeug (20), oder empfängt die erste Gruppe von Fahrzeugen (20, 21, 22), eine Zuordnungsbestätigungsnachricht (312, 322, 333), wobei die Zuordnungsbestätigungsnachricht (312, 322, 333) eine Zuordnungsbestätigungsinformation bezüglich einer Zuordnung weiterer spezifischer Senderessourcen (212) umfasst, die innerhalb des zweiten Funkversorgungsgebietes (12) zu verwenden sind,
wobei die Zuordnungsanforderungsinformation einen Hinweis umfasst auf:
- eine Periodizität einer Zug-internen Kommunikation und/oder
- ein erwartetes Datenvolumen einer Zug-internen Kommunikation.

2. Verfahren nach Anspruch 1,
wobei die Zuordnungsanforderungsnachricht (311, 321, 331) eine Zuordnungsanforderungsinformation umfasst, dergestalt, dass die spezifischen Senderessourcen (211), die innerhalb des ersten Funkversorgungsgebietes (11) verwendet werden, auch als weitere spezifische Senderessourcen (212) innerhalb des zweiten Funkversorgungsgebietes (12) verwendet werden sollen.

3. Verfahren nach einem der vorangehenden Ansprüche, wobei die Zuordnungsbestätigungsnachricht (312, 322, 333) eine Zuordnungsbestätigungsinformation umfasst, dergestalt, dass die weiteren spezifischen Senderessourcen (212), die innerhalb des zweiten Funkversorgungsgebietes (12) zu verwenden sind, den spezifischen Senderessourcen (211) entsprechen oder in Zeit und Frequenz mit den spezifischen Senderessourcen (211) identisch sind.

4. Verfahren nach einem der vorangehenden Ansprüche, wobei die spezifischen Senderessourcen (211) innerhalb des ersten und des zweiten Funkversorgungsgebietes (11, 12) verwendet werden und
wobei die angeforderten spezifischen Senderessourcen (211) insbesondere der Verwendung von Folgendem entsprechen:
- den selben Frequenzbereichsressourcen und den selben Zeitbereichsressourcen und/oder
- den selben Frequenzbereichsressourcen und den selben Zeitbereichsressourcen in Bezug auf das spezifische Wiederholungszeitintervall.

5. Verfahren nach einem der vorangehenden Ansprüche, wobei die Zuordnungsanforderungsinformation einen Hinweis umfasst auf:
- eine Priorität der mehreren Fahrzeuge (20, 21, 22) und/oder
- die angeforderten weiteren spezifischen Senderessourcen (212), die den spezifischen Senderessourcen (211) entsprechen oder mit den spezifischen Senderessourcen (211) identisch sind.

6. Verfahren nach einem der vorangehenden Ansprüche, wobei die spezifischen Senderessourcen (211) und die weiteren spezifischen Senderessourcen (212) von den mehreren den Zug bildenden Fahrzeugen (20, 21, 22), insbesondere einem Lkw-Zug oder einem Kleintransporter-Zug oder einem Pkw-Zug oder einem kombinierten Zug, der Lkw und/oder Kleintransporter und/oder Pkw umfasst, genutzt werden und
wobei der Zug ein Zugführerfahrzeug (20) und mindestens ein Zugteilnehmerfahrzeug (21, 22) umfasst.

7. Verfahren nach einem der vorangehenden Ansprüche,
wobei die Zuordnungsanforderungsnachricht (311) durch das erste Fahrzeug (20), das insbesondere ein Führungsfahrzeug (20) eines Zuges aus mehreren Fahrzeugen ist, oder durch eine erste Gruppe von Fahrzeugen (20, 21, 22) an die zweite Basisstationsentität (112) und innerhalb des zweiten Funkversorgungsgebietes (12) gesendet wird und
wobei die Zuordnungsbestätigungsnachricht (312) durch die zweite Basisstationsentität (112) an das erste Fahrzeug (20), das insbesondere ein Führungsfahrzeug (20) eines Zuges aus mehreren Fahrzeugen ist, oder an die erste Gruppe von Fahrzeugen (20, 21, 22) und innerhalb des zweiten Funkversorgungsgebietes (12) gesendet wird.

8. Verfahren nach einem der vorangehenden Ansprüche,
wobei die Zuordnungsanforderungsnachricht (321) durch die erste Basisstationsentität (111) an die zweite Basisstationsentität (112) gesendet wird und
wobei die Zuordnungsbestätigungsnachricht (322) durch die zweite Basisstationsentität (112) an das erste Fahrzeug (20), das insbesondere ein Führungsfahrzeug (20) eines Zuges aus mehreren Fahrzeugen ist, oder an die erste Gruppe von Fahrzeugen (20, 21, 22) und innerhalb des zweiten Funkversorgungsgebietes (12) gesendet wird.

9. Verfahren nach einem der vorangehenden Ansprüche,
wobei die Zuordnungsanforderungsnachricht (331) durch die erste Basisstationsentität (111) an die zweite Basisstationsentität (112) gesendet wird,
wobei die Zuordnungsbestätigungsnachricht (333) durch die erste Basisstationsentität (111) an das erste Fahrzeug (20), das insbesondere ein Führungsfahrzeug (20) eines Zuges aus mehreren Fahrzeugen ist, oder an die erste Gruppe von Fahrzeugen (20, 21, 22) und innerhalb des ersten Funkversorgungsgebietes (11) gesendet wird,
wobei vor dem Senden der Zuordnungsbestätigungsnachricht (333) an das erste Fahrzeug (20) oder an die erste Gruppe von Fahrzeugen (20, 21, 22) eine weitere Zuordnungsbestätigungsnachricht (332) durch die zweite Basisstationsentität (112) an die erste Basisstationsentität (111) gesendet wird,
wobei, insbesondere vor dem Senden der Zuordnungsanforderungsnachricht (331) durch die erste Basisstationsentität (111) an die zweite Basisstationsentität (112), eine weitere Zuordnungsanforderungsnachricht durch das erste Fahrzeug (20) oder durch eine erste Gruppe von Fahrzeugen (20, 21, 22) an die erste Basisstationsentität (111) und innerhalb des ersten Funkversorgungsgebietes (11) gesendet wird.

10. Mobilkommunikationsnetz (100) zur Verbesserung einer Fahrzeug-zu-Fahrzeug-Kommunikation unter Verwendung eines Frequenzbandes, das durch ein intelligentes Transportsystem und mindestens ein Mobilkommunikationsnetz (100) verwendet wird,
wobei das mindestens eine Mobilkommunikationsnetz (100) ein Funkzugangsnetz (110) umfasst, das mehrere Basisstationsentitäten (111, 112) umfasst, wobei jede der mehreren Basisstationsentitäten (111, 112) ein Funkversorgungsgebiet (11, 12) aufweist bzw. einem Funkversorgungsgebiet (11, 12) entspricht,
wobei das intelligente Transportsystem mehrere Fahrzeuge (20, 21, 22) umfasst, die einen Zug bilden,
wobei jedes Fahrzeug der mehreren Fahrzeuge (20, 21, 22) eine entsprechende Benutzerausrüstung umfasst oder mit einer entsprechenden Benutzerausrüstung verknüpft ist, dazu eingerichtet ist, innerhalb des Frequenzbandes direkte Kommunikationsnachrichten von Proximity Services zu senden,
wobei das Frequenzband Senderessourcen (200) für das Senden solcher direkter Kommunikationsnachrichten von Proximity Services durch die Benutzerausrüstungen der mehreren Fahrzeuge (20, 21, 22) umfasst,
wobei die Zuteilung von Senderessourcen (200) an Benutzerausrüstungen von Fahrzeugen (20, 21, 22) mindestens teilweise durch das Funkzugangsnetz (110) des Mobilkommunikationsnetzes (100) gesteuert wird,
wobei bezüglich eines ersten und eines zweiten teilweise überlappenden und/oder angrenzenden und/oder benachbarten Funkversorgungsgebietes (11, 12) Benutzerausrüstungen der mehreren Fahrzeuge (20, 21, 22) Senderessourcen (200) gemäß ihrem Fahrpfad innerhalb des ersten Funkversorgungsgebietes (11) und anschließend innerhalb des zweiten Funkversorgungsgebietes (12) nutzen,
wobei das Mobilkommunikationsnetz (100) so ausgeführt ist, dass:
- spezifische Senderessourcen (211) der Senderessourcen (200) durch das Funkzugangsnetz (110) oder durch die erste Basisstationsentität (111) einem ersten Fahrzeug (20) oder einer ersten Gruppe von Fahrzeugen (20, 21, 22) innerhalb des ersten Funkversorgungsgebietes (11) zugeordnet werden, und eine Zuordnungsanforderungsnachricht (311, 321, 331) durch die zweite Basisstationsentität (112) empfangen wird, wobei die Zuordnungsanforderungsnachricht (311, 321, 331) eine Zuordnungsanforderungsinformation bezüglich Senderessourcen (200) umfasst, die innerhalb des zweiten Funkversorgungsgebietes (12) zu verwenden sind,
- die erste und/oder die zweite Basisstationsentität (111, 112), insbesondere an das erste Fahrzeug (20) oder an die erste Gruppe von Fahrzeugen (20, 21, 22), eine Zuordnungsbestätigungsnachricht (312, 322, 333) senden, wobei die Zuordnungsbestätigungsnachricht (312, 322, 333) eine Zuordnungsbestätigungsinformation bezüglich einer Zuordnung weiterer spezifischer Senderessourcen (212) umfasst, die innerhalb des zweiten Funkversorgungsgebietes (12) zu verwenden sind,
wobei die Zuordnungsanforderungsinformation einen Hinweis umfasst auf:
- eine Periodizität einer Zug-internen Kommunikation und/oder
- ein erwartetes Datenvolumen einer Zug-internen Kommunikation.

11. Programm, umfassend einen computerlesbaren Programmcode, der, wenn er in einem Mobilkommunikationsnetz (100) nach Anspruch 10 ausgeführt wird, das Mobilkommunikationsnetz (100) veranlasst, ein Verfahren nach einem der Ansprüche 1 bis 9 durchzuführen.

12. Computerprogrammprodukt zur Verbesserung einer Fahrzeug-zu-Fahrzeug-Kommunikation unter Verwendung eines Frequenzbandes, das durch ein intelligentes Transportsystem und mindestens ein Mobilkommunikationsnetz (100) verwendet wird, wobei das Computerprogrammprodukt ein auf einem Speichermedium gespeichertes Computerprogramm umfasst, wobei das Computerprogramm Programmcode umfasst, der, wenn er in einem Mobilkommunikationsnetz (100) nach Anspruch 10 ausgeführt wird, das Mobilkommunikationsnetz (100) veranlasst, ein Verfahren nach einem der Ansprüche 1 bis 9 durchzuführen.

## Revendications

1. Procédé permettant d'améliorer la communication de véhicule à véhicule à l'aide d'une bande de fréquences utilisée par un système de transport intelligent et au moins un réseau de communication mobile (100), dans lequel l'au moins un réseau de communication mobile (100) comprend un réseau d'accès radioélectrique (110) comprenant une pluralité d'entités stations de base (111, 112), chaque entité de la pluralité d'entités stations de base (111, 112) ayant ou correspondant respectivement à une zone de couverture radioélectrique (11, 12),
dans lequel le système de transport intelligent comprend une pluralité de véhicules (20, 21, 22) formant un peloton, dans lequel chaque véhicule de la pluralité de véhicules (20, 21, 22) comprend ou est associé à un équipement d'utilisateur correspondant qui est autorisé à transmettre, à l'intérieur de la bande de fréquences, des messages de communication directe de services de proximité, dans lequel la bande de fréquences comprend des ressources de transmission (200) pour la transmission, par les équipements d'utilisateurs de la pluralité de véhicules (20, 21, 22), de ces messages de communication directe de services de proximité, dans lequel l'attribution de ressources de transmission (200) à des équipements d'utilisateurs de véhicules (20, 21, 22) est, au moins en partie, commandée par le réseau d'accès radioélectrique (110) du réseau de communication mobile (100),
dans lequel, en ce qui concerne des première et seconde zones de couverture radioélectrique (11, 12) en chevauchement partiel et/ou adjacentes et/ou voisines, les équipements d'utilisateurs de la pluralité de véhicules (20, 21, 22) utilisent des ressources de transmission (200), en fonction de leur trajet de déplacement, à l'intérieur de la première zone de couverture radioélectrique (11), puis à l'intérieur de la seconde zone de couverture radioélectrique (12),
dans lequel le procédé comprend les étapes suivantes :
- dans une première étape, des ressources de transmission spécifiques (211) des ressources de transmission (200) sont attribuées, par le réseau d'accès radioélectrique (110) ou par la première entité station de base (111), à un premier véhicule (20) ou à un premier groupe de véhicules (20, 21, 22) à l'intérieur de la première zone de couverture radioélectrique (11), et un message de demande d'attribution (311, 321, 331) est transmis à la seconde entité station de base (112), dans lequel le message de demande d'attribution (311, 321, 331) comprend des informations de demande d'attribution concernant des ressources de transmission (200) à utiliser à l'intérieur de la seconde zone de couverture radioélectrique (12),
- dans une seconde étape faisant suite à la première étape, le premier véhicule (20) ou le premier groupe de véhicules (20, 21, 22) reçoit un message d'accusé de réception d'attribution (312, 322, 333), dans lequel le message d'accusé de réception d'attribution (312, 322, 333) comprend des informations d'accusé de réception d'attribution concernant une attribution de ressources de transmission spécifiques supplémentaires (212) à utiliser à l'intérieur de la seconde zone de couverture radioélectrique (12),
dans lequel les informations de demande d'attribution comprennent l'indication :
- d'une périodicité de communication interne au peloton, et/ou
- d'un volume attendu de données de communication interne au peloton.

2. Procédé selon la revendication 1, dans lequel le message de demande d'attribution (311, 321, 331) comprend des informations de demande d'attribution de manière que les ressources de transmission spécifiques (211) utilisées à l'intérieur de la première zone de couverture radioélectrique (11) soient également utilisées, en tant que ressources de transmission spécifiques supplémentaires (212) à l'intérieur de la seconde zone de couverture radioélectrique (12).

3. Procédé selon l'une des revendications précédentes, dans lequel le message d'accusé de réception d'attribution (312, 322, 333) comprend des informations d'accusé de réception d'attribution de manière que les ressources de transmission spécifiques supplémentaires (212), à utiliser à l'intérieur de la seconde zone de couverture radioélectrique (12), correspondent ou soient identiques en temps et en fréquence aux ressources de transmission spécifiques (211).

4. Procédé selon l'une des revendications précédentes, dans lequel les ressources de transmission spécifiques (211) sont utilisées à l'intérieur des première et seconde zones de couverture radioélectrique (11, 12), et dans lequel les ressources de transmission spécifiques (211) demandées correspondent en particulier à l'utilisation :
- des mêmes ressources dans le domaine fréquentiel et des mêmes ressources dans le domaine temporel, et/ou
- des mêmes ressources dans le domaine fréquentiel et des mêmes ressources dans le domaine temporel concernant l'intervalle de temps de répétition spécifique.

5. Procédé selon l'une des revendications précédentes, dans lequel les informations de demande d'attribution comprennent l'indication :
- d'une priorité de la pluralité de véhicules (20, 21, 22), et/ou
- de ce que les ressources de transmission spécifiques supplémentaires (212) demandées correspondent ou sont identiques aux ressources de transmission spécifiques (211).

6. Procédé selon l'une des revendications précédentes, dans lequel les ressources de transmission spécifiques (211) et les ressources de transmission spécifiques supplémentaires (212) sont utilisées par la pluralité de véhicules (20, 21, 22) formant le peloton, en particulier un peloton de camions ou un peloton de camions légers ou un peloton de voitures ou un peloton mixte comprenant à la fois des camions et/ou des camions légers et/ou des voitures, et dans lequel le peloton comprend un véhicule gestionnaire de peloton (20) et au moins un véhicule membre de peloton (21, 22).

7. Procédé selon l'une des revendications précédentes, dans lequel le message de demande d'attribution (311) est transmis, à la seconde entité station de base (112) et à l'intérieur de la seconde zone de couverture radioélectrique (12), par le premier véhicule (20) - qui est en particulier un véhicule gestionnaire (20) d'un peloton d'une pluralité de véhicules - ou par un premier groupe de véhicules (20, 21, 22), et dans lequel le message d'accusé de réception d'attribution (312) est transmis, au premier véhicule (20) - qui est en particulier un véhicule gestionnaire (20) d'un peloton d'une pluralité de véhicules
- ou au premier groupe de véhicules (20, 21, 22) et à l'intérieur de la seconde zone de couverture radioélectrique (12), par la seconde entité station de base (112).

8. Procédé selon l'une des revendications précédentes, dans lequel le message de demande d'attribution (321) est transmis, à la seconde entité station de base (112), par la première entité station de base (111), et dans lequel le message d'accusé de réception d'attribution (322) est transmis, au premier véhicule (20) - qui est en particulier un véhicule gestionnaire (20) d'un peloton d'une pluralité de véhicules - ou au premier groupe de véhicules (20, 21, 22) et à l'intérieur de la seconde zone de couverture radioélectrique (12), par la seconde entité station de base (112).

9. Procédé selon l'une des revendications précédentes, dans lequel le message de demande d'attribution (331) est transmis, à la seconde entité station de base (112), par la première entité station de base (111), dans lequel le message d'accusé de réception d'attribution (333) est transmis, au premier véhicule (20) - qui est en particulier un véhicule gestionnaire (20) d'un peloton d'une pluralité de véhicules - ou au premier groupe de véhicules (20, 21, 22) et à l'intérieur de la première zone de couverture radioélectrique (11), par la première entité station de base (111), dans lequel, avant la transmission du message d'accusé de réception d'attribution (333) au premier véhicule (20) au ou premier groupe de véhicules (20, 21, 22), un message supplémentaire d'accusé de réception d'attribution (332) est transmis par la seconde entité station de base (112) à la première entité station de base (111), dans lequel, en particulier avant la transmission du message de demande d'attribution (331) par la première entité station de base (111) à la seconde entité station de base (112), un message supplémentaire de demande d'attribution est transmis, par le premier véhicule (20) ou par un premier groupe de véhicules (20, 21, 22), à la première entité station de base (111) et à l'intérieur de la première zone de couverture radioélectrique (11).

10. Réseau de communication mobile (100) permettant d'améliorer la communication de véhicule à véhicule à l'aide d'une bande de fréquences utilisée par un système de transport intelligent et au moins un réseau de communication mobile (100), dans lequel l'au moins un réseau de communication mobile (100) comprend un réseau d'accès radioélectrique (110) comprenant une pluralité d'entités stations de base (111, 112), chaque entité de la pluralité d'entités stations de base (111, 112) ayant ou correspondant respectivement à une zone de couverture radioélectrique (11, 12),
dans lequel le système de transport intelligent comprend une pluralité de véhicules (20, 21, 22) formant un peloton, dans lequel chaque véhicule de la pluralité de véhicules (20, 21, 22) comprend ou est associé à un équipement d'utilisateur correspondant qui est autorisé à transmettre, à l'intérieur de la bande de fréquences, des messages de communication directe de services de proximité, dans lequel la bande de fréquences comprend des ressources de transmission (200) pour la transmission, par les équipements d'utilisateurs de la pluralité de véhicules (20, 21, 22), de ces messages de communication directe de services de proximité, dans lequel l'attribution de ressources de transmission (200) à des équipements d'utilisateurs de véhicules (20, 21, 22) est, au moins en partie, commandée par le réseau d'accès radioélectrique (110) du réseau de communication mobile (100),
dans lequel, en ce qui concerne des première et seconde zones de couverture radioélectrique (11, 12) en chevauchement partiel et/ou adjacentes et/ou voisines, les équipements d'utilisateurs de la pluralité de véhicules (20, 21, 22) utilisent des ressources de transmission (200), en fonction de leur trajet de déplacement, à l'intérieur de la première zone de couverture radioélectrique (11), puis à l'intérieur de la seconde zone de couverture radioélectrique (12),
dans lequel le réseau de communication mobile (100) est configuré de telle sorte que :
- des ressources de transmission spécifiques (211) des ressources de transmission (200) soient attribuées, par le réseau d'accès radioélectrique (110) ou par la première entité station de base (111), à un premier véhicule (20) ou à un premier groupe de véhicules (20, 21, 22) à l'intérieur de la première zone de couverture radioélectrique (11), et un message de demande d'attribution (311, 321, 331) soit reçu par la seconde entité station de base (112), dans lequel le message de demande d'attribution (311, 321, 331) comprend des informations de demande d'attribution concernant des ressources de transmission (200) à utiliser à l'intérieur de la seconde zone de couverture radioélectrique (12),
- les première et/ou seconde entités stations de base (111, 112) transmettent, en particulier au premier véhicule (20) ou au premier groupe de véhicules (20, 21, 22), un message d'accusé de réception d'attribution (312, 322, 333), dans lequel le message d'accusé de réception d'attribution (312, 322, 333) comprend des informations d'accusé de réception d'attribution concernant une attribution de ressources de transmission spécifiques supplémentaires (212) à utiliser à l'intérieur de la seconde zone de couverture radioélectrique (12),
dans lequel les informations de demande d'attribution comprennent l'indication :
- d'une périodicité de communication interne au peloton, et/ou
- d'un volume attendu de données de communication interne au peloton.

11. Programme comprenant un code de programme lisible par ordinateur, qui, lorsqu'il est exécuté dans un réseau de communication mobile (100) selon la revendication 10, fait mettre en œuvre au réseau de communication mobile (100) un procédé selon l'une des revendications 1 à 9.

12. Produit-programme informatique permettant d'améliorer la communication de véhicule à véhicule à l'aide d'une bande de fréquences utilisée par le système de transport intelligent et au moins un réseau de communication mobile (100), le produit-programme informatique comprenant un programme informatique enregistré sur un support d'enregistrement, le programme informatique comprenant un code de programme qui, lorsqu'il est exécuté dans un réseau de communication mobile (100) selon la revendication 10, fait mettre en œuvre au réseau de communication mobile (100) un procédé selon l'une des revendications 1 à 9.
